# EUROPEAN PATENT SPECIFICATION

(11) **EP 0 334 376 B1**
(45) Date of publication and mention of the grant of the patent: **19.05.1993**
(21) Application number: 89105289.6
(22) Date of filing: 23.03.1989
(51) Int. Cl.: C09J 4/00, C08F 4/00, C08F 279/00

(54) **Adhesive compositions**
Klebstoffzusammensetzungen
Compositions adhésives

(30) Priority: 25.03.1988 IT 1995188
(43) Date of publication of application: 27.09.1989
(73) Proprietor: MINISTERO DELL' UNIVERSITA' E DELLA RICERCA SCIENTIFICA E TECNOLOGICA, 00196 Roma (IT)
(72) Inventor: Morini, Giampiero, I-27058 Voghera Pavia (IT); Garbassi, Fabio, I-28100 Novara (IT); Citterio, Attilio, I-20132 Milan (IT)
(74) Representative: Barz, Peter, Dr.

(56) References cited:
- EP-A- 0 034 046
- WO-A-81/03177
- US-A- 3 446 752
- DATABASE CHEMICAL ABSTRACTS (HOST: STN) vol. 85, no. 14, 1976, abstract no. 94755e, Columbus, Ohio, US

## Description

The present invention relates to an adhesive composition, and in particular to a new redox system of radicalic polymerization initiation particularly suitable for said adhesives.

The use of structural adhesives has substantially increased lately, chiefly in the aerospace and automotive fields, with the consequent development of new high-performance adhesive systems.

The use of structural adhesives in such fields has facilitated the replacement of the conventional metal materials with polymeric materials.

Moreover, the finding and development of the class of structural acrylic adhesives has made their application possible, on non-pretreated surfaces as well and even on not-perfectly-cleaned surfaces, without excessively affecting the adhesive performance.

Contrary to the conventional epoxide bicomponent adhesive systems, which generally react slowly at room temperature and moreover require a careful premixing of the components and a careful preparation of the surfaces as well, recent bicomponent structural acrylic adhesives contain catalysts and adhesion promoters that bring about quick hardening at room temperature and do not require any premixing of the components, nor any very careful preparation of the surfaces.

Many systems of polymerization initiation have been developed for acrylic adhesive compositions.

For instances, catalytic systems are known to the prior art comprising the combination of a tertiary amine and a peroxide (U S - A - 3 333 025); aldehyde/amine condensation products in combination with metal chelates (U S - A - 3 591 438); amine with benzoyl peroxide (U S - A -3 725 504 and 3 832 274); a redox system with methylethylketone hydroperoxide and cobalt naphthenate (U S - A - 3 838 093); the combination of amines, salts of transition metals, aldehyde/amine products of condensation and peroxides (U S - A - 3 890 407); amines and peroxides in combination with oxidizable metal ions (U S - A - 3 994 764); saccharin or copper saccharinate and para-toluene sulfonic acid (U S - A - 4 052 244); peroxides and aldehyde/amine condensation products with non-transition metals comprising lead, zinc, tin, calcium, strontium, barium and cadmium (U S - A - 4 230 834); and a peroxidic initiator with a strong acid and ferrocene (U S - A - 3 855 040).

None of these adhesive compositions, however, is free from some drawbacks, such as for instance, poor storage stability, long setting time, and so on.

In accordance with the present invention, it has now been discovered that the above mentioned drawbacks may be overcome by using a particular redox polymerization initation system consisting of an oxaziridine and a reducing system, in the presence of a polymerization accelerator constituted by a sulfimide.

In its broadest aspect, the invention relates to bicomponent adhesive compositions having short setting times, high storage stability, and high mechanical performance, comprising or consisting essentially of:
- a solution of an elastomer in one or more polymerizable vinyl monomers;
- an accelerator constituted by a sulfimide;
- a polymerization initiator constituted by an oxaziridine having the formula: 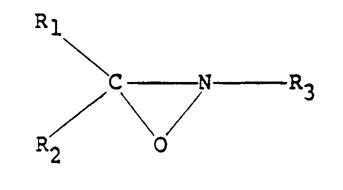 wherein R₁, R₂ and R₃, which may be the same or different, may be a hydrogen atom, a hydrocarbon radical having a number of carbon atoms between 1 and 20 and selected from the group consisting of alkyl, isoalkyl, alkylene, alkenyl, cyclo-alkyl, cyclo-alkylene, arylene, aryl, alkyl-aryl, alkyl-arylene, aryl-alkyl, aryl-alkylene, alkyl-cyclo-alkyl, and alkyl-cyclo-alkylene radicals; and
- an organic or inorganic reducing agent (also defined as a polymerization activator).

The vinyl monomers which may be used in the adhesive compositions of the present invention comprise the acrylic monomers and their mixtures, for instance methyl methacrylate, ethyl methacrylate, acrylonitrile, methacrylonitrile, methyl acrylate, ethylacrylate, n-butyl methacrylate, cyclohexyl methacrylate, n-hexyl methacrylate, 2-ethylhexyl methacrylate, lauryl methacrylate, n-butyl acrylate, cyclohexyl acrylate, n-hexyl acrylate, 2-ethylhexyl acrylate, lauryl acrylate, methacrylic acid, acrylic acid, glycidyl methacrylate, itaconic acid, acrylic or methacrylic esters of diols, of triols and polyols, acrylamide, methacrylamide, the halogenated monomers, for instance vinylidene chloride, chlorostyrenes, 2,3-dichloro-1,3-butadiene, 2-chloro-1,3-butadiene, styrene, and mono- and polyalkyl-styrenes, for instance methyl styrenes, dimethylstyrenes, ethylstyrenes, and terbutylstyrenes:

As acrylic monomers are chiefly preferred alkyl and cycloalkyl acrylates and methacrylates, ethylene glycol diacrylate and dimethacrylate, acrylic and methacrylic acid.

Any elastomer known to the prior art and soluble in the above mentioned polymerizable vinyl monomer or monomers may be used in the adhesive compositions of the present invention.

Examples of suitable elastomers are chlorinated polyethylene, polybutadiene, butadiene/acrylonitrile copolymers, polyacrylates, polyisoprene, polychloroprene, polyurethanes, and fluorinated elastomers.

The butadiene/acrylonitrile copolymer produced and traded by ENICHEM, S. Donato-Milan, by the trademark ELAPRIM^{®} is preferred.

The relative ratio between the elastomer and polymerizable vinyl monomer may vary over a wide range, and generally it is between 100 and 2 000 parts by weight of the monomer per 100 parts of the elastomer. However, a range from 100 to 500 parts by weight of the monomer per 100 parts of the elastomer is preferred.

The sulfimide, used as an accelerator in the adhesive compositions of the present invention, corresponds to the formula: 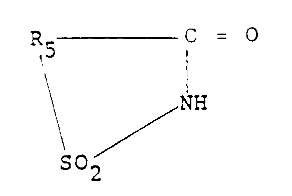
wherein R₅ is an aromatic bivalent radical having from 6 to 20 carbon atoms.

Saccharine is the sulfimide particularly preferred in the compositions of the present invention.

The amount of the sulfimide is not critical and generally it is lower than 10 parts by weight per 100 parts of the solution. However, amounts between 0.1 and 2% by weight are preferred.

A stabilizing agent selected from the group consisting of quinones and hydroquinones, for instance hydroquinone, hydroquinone monomethylether, anthraquinone, 2,6-di-tert- butyl-p- methylphenol (BHT), and the like, in amounts ranging from 0.1 to 2 parts by weight per 100 parts of solution, may be further added to the solutions; 2,6-di-tert-butyl-p- methylphenol (BHT) being the preferred stabilizing agent.

The agent generating free radicals is an oxaziridine having the formula: 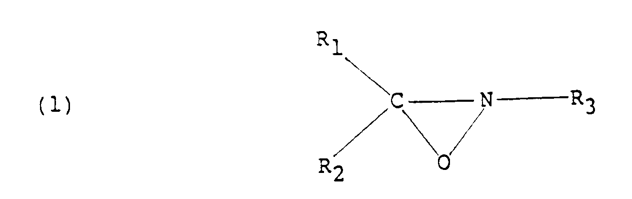
wherein R₁, R₂ and R₃, which may be the same or different, may be a hydrogen atom, an aliphatic, cycloalkylic, aromatic radical containing from 1 to 20 carbon atoms, such as for instance alkyl, alkenyl, aryl, cycloalkyl, alkylaryl, arylalkyl, alkylcycloalkyl and cycloalkyl-alkyl radicals; R₁ and R₂ and R₁ or R₂ and R₂ may be taken together to form a cycloalkyl ring either as cycloalkylene or as a heterocyclic ring containing the nitrogen atom as heteroatom.

Moreover, two radicals R₃ and two or four radicals R₁ and R₂ may be taken together to form a polyoxaziridine having the formula: 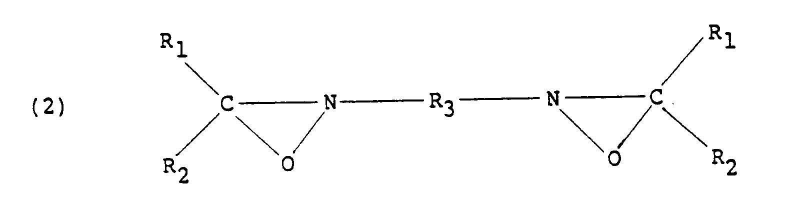
or the formula: 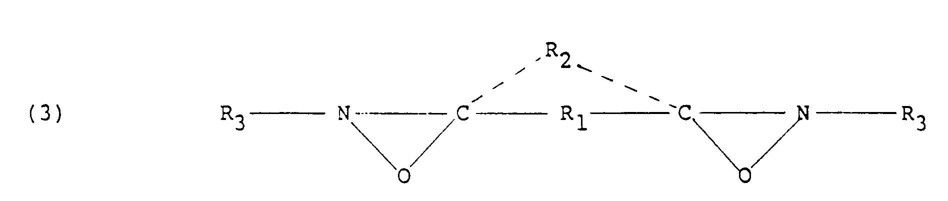
wherein R₁, R₂ and R₃ may be of the type specified in formula (1), but bivalent where indicated in formulas (2) and (3).

Molecules containing up to 5 oxaziridinic rings bound by bivalent radicals are within the invention.

Examples of radicals R₁, R₂ and R₃ are the following: methyl, ethyl, n-propyl, isopropyl, n-butyl, isobutyl, sec-butyl, ter-butyl, n-amyl, iso-amyl, sec-amyl, neopentyl, trimethylethyl, n-octyl, 2-ethylhexyl, isooctyl, n-nonyl, isononyl, n-decyl, n-dodecyl, n-undecyl, n-tetradecyl, n-octadecyl, n-eicosyl, allyl, butenyl, hexenyl, linolenyl, oleyl and octenyl; cycloprcpyl, cyclobutyl, cyclopentyl, cyclohexyl, cycloheptyl, cyclooctyl, cyclododecyl, methylcyclohexyl, methylcyclopentyl, ethylcyclohexyl, diethylycyclobutyl, cyclohexylcyclohexyl, tetrahydronaphthyl; benzyl, phenyl, α-phenylethyl, β-phenylethyl, xylyl, toluyl ethylbenzyl, ethylphenyl, naphthyl, phenanthryl, bisphenyl, chrysenyl, fluoroenyl, α- and β-naphthylethyl; acyl such as benzoyl, acetyl, methacryloyl, acryloyl; and, when R₁ and R₂ and R₁ and/or R₂ and/or R₃ are taken together, tetramethylene, pentamethylene and hexamethylene; phenylene, cyclohexylene, 1,4-dimethylenephenylene.

The oxaziridines may be prepared easily according to known methods. A suitable method consists in oxidizing the corresponding imine by means of a peracid, such as peracetic acid or perbenzoic acid, or by means of hydrogen peroxide.

The corresponding ketones or aldehydes may also be reacted with chloramine or with hydroxylamino-O-sulfonic acid and their N-alkyl or N-aryl derivatives in the presence of alkalis.

These reactions are illustrated by the following equations:

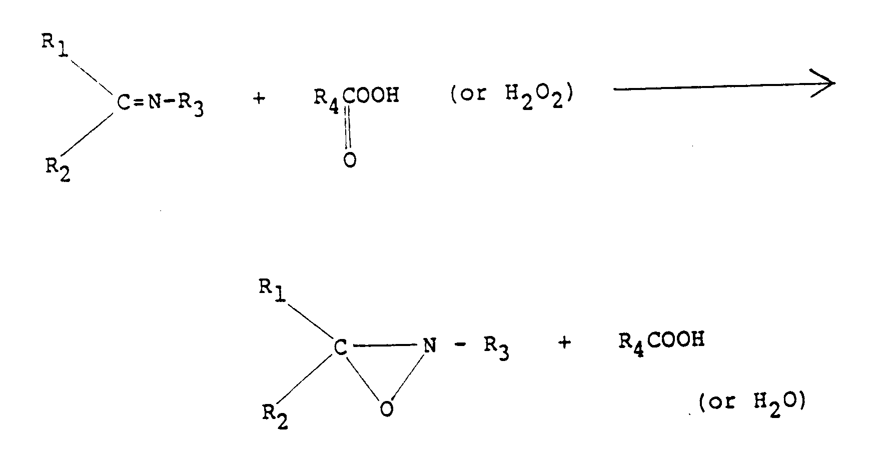

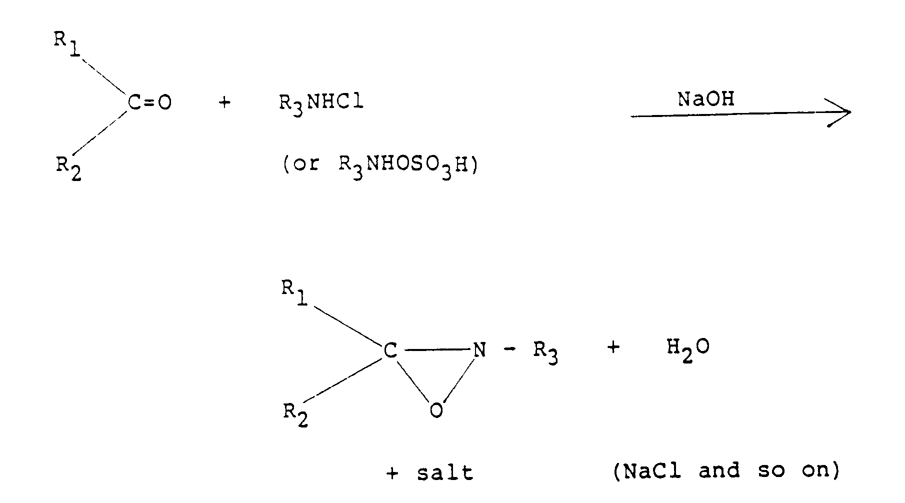

In the above, formulas R₁, R₂ and R₃ have the meanings defined hereinbefore and R₄ represents the radical of the peracid and may be the same as any one of the radicals R₁, R₂ and R₃ hereinbefore.

Examples of oxaziridines which may be used as generators of free radicals in the compositions of the present invention are the following:

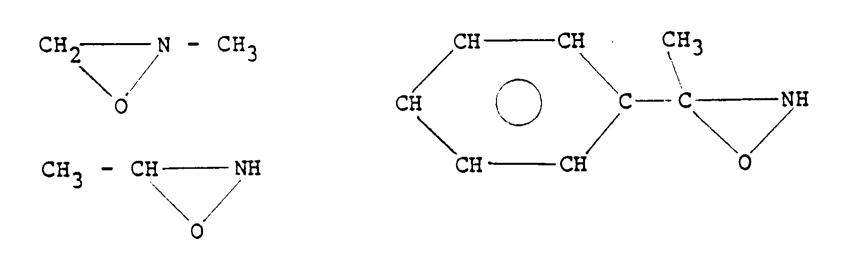

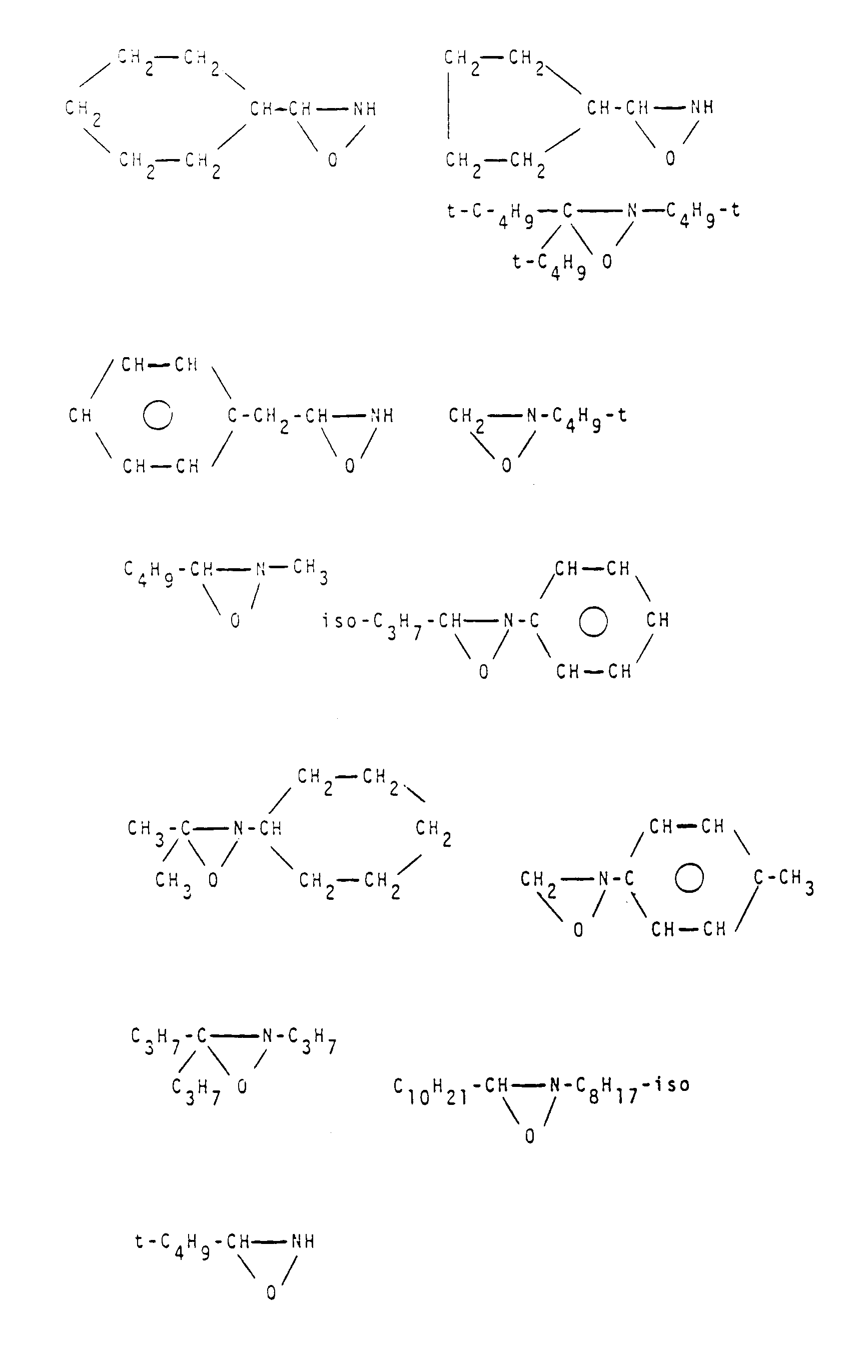

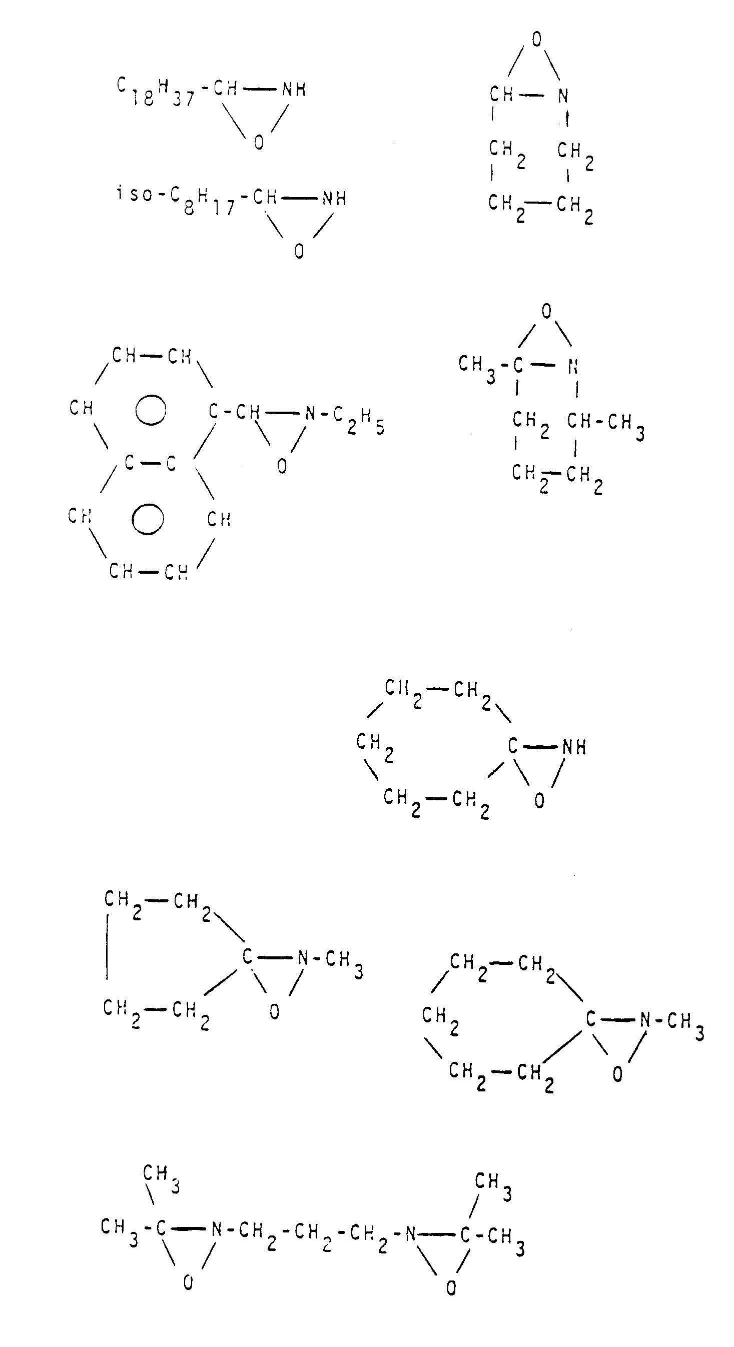

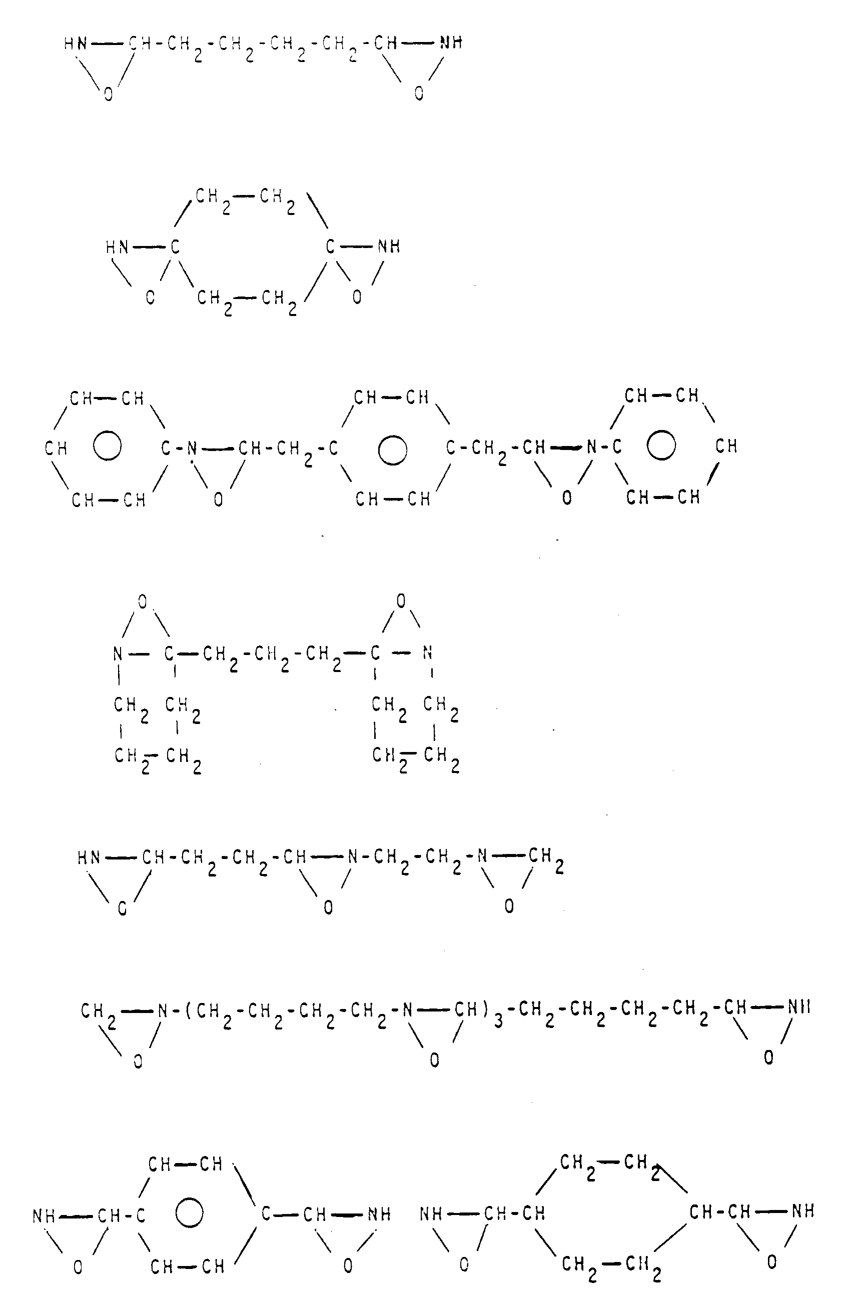

The amount of oxaziridine used in the adhesive systems of the invention may range from 0.01 to 10% by moles with respect to the overall amount of double bonds of the vinyl monomers present.

Amounts ranging from 0.02% to 5% are preferred. Amounts higher than 10% may be used but without further improving the characteristics of the adhesive systems of the present invention.

The oxaziridines may be used in combination with any known reducing agent or polymerization activator.

Examples of suitable reducing agents are: ferrous chloride; titanium dichloride; sodium or potassium bisulfite; ascorbic acid; acetaldehyde and other aldehydes; sulfurous acid; alkali metal sulfites, bisulfites, sulfoxylates, thiosulfates; hydrogen sulfide; hydroxylamine; hydrazide; acetone; sodium bisulfite; formaldehyde sodium sulfoxylate; sulfinic acids; copper and iron salts, salts of other metals having a low valency; levulinic acid; reducing sugars such as glucose; β-mercaptoethanol; dicyandiamide; iron salts of amino acids; iron succinate; copper sulfate pentahydrate; and tertiary amines.

Moreover, it has been found that mixtures of aldehyde/amine condensation products are particularly suitable for use as reducing agents or as polymerization activators; these mixtures of condensation products may be used as such, or partially purified, in order to achieve a higher concentration of the most active components; in both cases, a soluble salt of a transition metal may be added.

Any aldehydes and amines are suitable for preparing the aldehyde/amine condensation mixture according to known methods. The aldehydes are preferably aliphatic and contain radicals having from 1 to 12 carbon atoms, for instance acetaldehyde, n-butyraldehyde, propionaldehyde, cyclopentanal; n-hexanal, cyclohexanal, hydrocinnamic aldehyde, n-heptanal, n-decanal, and n-dodecanal. Any primary aliphatic or aromatic amine having up to 18 carbon atoms may be used, for instance ethylamine, n-butylamine, n-pentylamine, cyclopentylamine, n-hexylamine, cyclohexylamine, n-octylamine, n-decylamine, n-dodecylamine, n-hexadecylamine, n-octadecylamine, n-dodecylamine, n-hexadecylamine, n-oxtadecylamine, aniline, tolyl amines, and xylyl amines.

The preferred mixture for use as polymerization activator consists of butyraldehyde/aniline condensation products, available on the market under the trademark VAMAC^{®} 808, by DuPont Company.

The most active component of the mixture is N-phenyl-3,5-diethyl-2-propyl-1,2-dihydropyridine (DHP), present in the mixture in amounts not higher than 50% by weight.

The activator may be enriched with DHP up to 100% by fractional distillation. Fractions containing DHP between 70% and 100% by weight may be used, with improved performance.

In the present invention, by the term DHP mixtures are meant containing at least 70% by weight of the above mentioned dihydropyridine derivative.

Both the aniline/butyraldehyde condensation mixture and DHP can be used as such or diluted with solvents, preferably chlorinated solvents, for instance 1,1,1-trichloroethane, methylene chloride, and the like, with different amounts of solvent ranging from 10 to 80% by weight.

Soluble salts of transition metals containing preferably cobalt, nickel, copper, manganese, iron and vanadium, may be added either to the aniline/butyraldehyde condensation mixture or to DHP or to solutions thereof, in concentrations not higher than 5% by weight.

Examples of usable organic salts are: copper saccharinate, copper p-toluenesulfinate, cobalt acetylacetonate, coblat naphthenate, vanadium acetylacetonate, iron octoate, iron naphthenate, iron lactate, iron gluconate, and iron saccharinate.

The acrylic adhesive compositions of the present invention are characterized by a more efficient redox system of radicalic polymerization, which confers upon them a short setting time, measured as the time over which two glued specimens cannot be separated by shearing stress applied manually.

The adhesive compositions of the present invention are utilized by the primer technique, which involves the application of the adhesive component to one part which has to be adhered, and the application of the activating agent on the other part which has to be adhered.

Moreover, the adhesive compositions may be utilized not only at room temperature but also at higher temperatures, both in the setting step and in the working step.

The adhesive compositions of the present invention may be used on porous surfaces or on smooth surfaces, without necessarily requiring any pretreatment of the surfaces on which the compositions are to be applied.

Materials which may be glued by the acrylic adhesives of the present invention are: e.g. steel, aluminum, copper, brass polymeric materials, wood, glass, paper, and previously painted surfaces.

A few examples will be given hereinafter by way of illustration, but not of limitation, in order still better to understand the invention.

### Examples 1-2 (Comparison Tests)

Variable amounts of 3,3-pentamethylene-2-cyclohexyloxaziridine were added to a predetermined composition consisting of: 20 g of ELAPRIM^{®}S 3345 (butadiene-acrylonitrile copolymer produced and sold by ENICHEM); 10 g of methacrylic acid; 63 g of cyclohexylmethacrylate; 5 g ethyleneglycol dimethacrylate; and 0.33 g of BHT, in order to obtain adhesive systems having molar ratios (between the oxaziridine and the overall amount of double bonds) as reported in Table 1.

The adhesive systems were prepared by keeping the mixtures under stirring at room temperature until complete dissolution of the polymer.

The thus-obtained adhesive systems were characterized by measuring the resistance to shearing stress, according to ASTM D 1002-72 (1983), and the setting time, by using, as the polymerization activator, a solution in methylene chloride consisting of 80 parts of DHP and 0.1 parts of copper (I) saccharinate per 100 parts of solution.

Six simple overlapped joints were prepared for each adhesive system, by using steel specimens having the size: 120 x 25 x 1.5 mm, merely degreased by trichloroethylene.

A film of adhesive paste, having a thickness of about 0.5 mm, was spread on a specimen and a film of polymerization activator was spread on the other specimen. The parts of the two specimens intended for adhesion were then joined.

The resistance to shearing stress was measured by means of apparatus MTS 810, according to ASTM D 1002-72 (1983), by keeping a cutting speed of 1 mm/min. and carrying out the test 72 hours after gluing.

Setting time was measured by means of the same gluing method of the same parts intended for adhesion, and of the same treatments used for the preparation of the simple overlapped joints, used for measuring the resistance to shearing stress, and by measuring the lowest time necessary for breaking the joint under a manually applied shearing stress.

The values of the resistance to shearing stress (an average of 6 tests) and of the setting times are set forth in Table 1.

**Table 1**

| Example No. | 1 | 2 |
|---|---|---|
| Oxaziridine (moles % with respect to C=C) | 1.5% | 3% |
| Setting time | 9′ | 11′ |
| Resistance to shearing (N/mm²) | 12.9 | 13.2 |

### Examples 3-5

Variable amounts of saccharine and 3,3-pentamethylene-2-cyclohexyloxaziridine were added to an adhesive composition having the same composition as already described above in Examples 1-2, thus obtaining adhesive systems having the saccharine/double bond and oxaziridine/double bond molar ratios reported in Table 2.

Preparation and characterization of the adhesive systems were carried out under the same conditions as described above in Examples 1-2.

The values of resistance to shearing (an average of 6 tests) and of setting times are set forth in Table 2.

**Table 2**

| Example No. | 3 | 4 | 5 |
|---|---|---|---|
| Oxaziridine (moles % with respect to C=C) | 1.5% | 3% | 3% |
| Saccharine (moles % with respect to C=C) | 1% | 1% | 2% |
| Setting time | 1′45˝ | 2′ | 2′ |
| Resistance to shearing (N/mm²) | 14 | 16.6 | 16.4 |

## Claims

1. Bicomponent adhesive compositions comprising:
(a) a solution of an elastomer in one or more polymerizable vinyl monomers;
(b) a sulfimide having the formula: 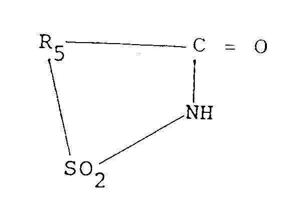 wherein R₅ is a bivalent aromatic radical containing from 6 to 20 carbon atoms;
(c) a polymerisation initiator comprising an oxaziridine of general formula (I): 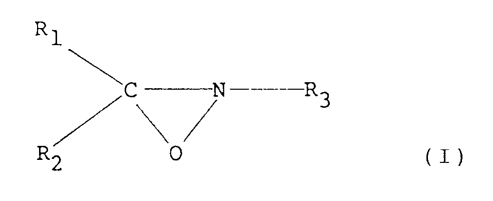 wherein each of R₁, R₂ and R₃, the same or different, represent hydrogen or a C₁-C₂₀ hydrocarbon radical selected from alkyl, iso-alkyl, alkenyl, alkylene, cyclo-alkyl, cyclo-alkylene, arylene, aryl, alkyl-aryl, alkyl-arylene, aryl-alkyl, aryl-alkylene, alkyl-cycloalkyl and alkyl-cycloalkylene radicals, or R₁ and R₂ and R₁ or R₂ and R₃ together form a cycloalkyl ring or a heterocyclic ring containing the N-atom as the hetero-atom, or two radicals R₃ and two or four radicals R₁ and R₂ taken together form a polyoxaziridine; and
(d) an organic or inorganic reducing agent, also defined as polymerization activator.

2. Compositions according to claim 1, wherein the oxaziridine of formula (I) is present in amounts ranging from 0.01 to 10% by moles with respect to the overall amount of double bonds of the vinyl monomers.

3. Compositions according to claims 1 or 2, wherein the oxaziridine of formula (I) has from 1 to 5 oxaziridine rings.

4. Compositions according to any one of claims 1 to 3, wherein the polymerizable vinyl monomer or monomers are acrylic monomers and the elastomer is a butadiene/ acrylonitrile copolymer, present in amounts ranging from 100 to 2000 parts by weight of monomer per 100 parts by weight of polymer.

5. Compositions according to any one of claims 1 to 4, wherein the sulfimide (b) is saccharine.

6. Compositions according to any one of claims 1 to 5, wherein the amount of sulfimide (b) is lower than 10 parts by weight per 100 parts by weight of solution, and preferably is between 0.1 and 2% by weight with respect to the solution.

7. Composition according to any one of claims 1 to 6, wherein the reducing agent (d) is a mixture of aldehyde/amine condensation products.

8. Compositions according to claim 7, wherein the aldehyde/amine condensation product mixture consists of butyraldehyde/aniline condensation products, the most active component of said butyraldehyde/aniline condensation product mixture preferably being N-phenyl-3,5-diethyl-2-propyl-1,2-dihydropyridine (DHP), having a degree of purity higher than 70% by weight.

9. Compositions according to claim 8, wherein the butyraldehyde/aniline condensation products or DHP are diluted with a solvent such as methylene chloride or toluene, the amount of solvent ranging from 10 to 80% by weight.

10. Compositions according to claim 8 or 9, wherein a soluble salt of a transition metal selected from cobalt, nickel, copper, manganese, iron and vanadium is added in a concentration not higher than 5% by weight with respect to the butyraldehyde/aniline condensation products or DHP.

11. Compositions according to claim 10, wherein the soluble salt of a transition metal is copper (I) or (II) saccharinate or iron (II) or (III) saccharinate.

## Patentansprüche

1. Zweikomponenten-Klebstoffzusammensetzungen, umfassend:
(a) eine Lösung eines Elastomeren in einem oder mehr polymerisierbaren Vinylmonomeren;
(b) ein Sulfimid mit der Formel 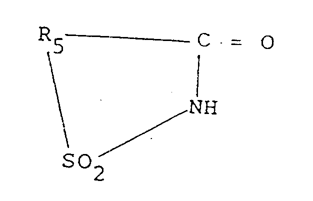 worin R₅ ein Zweiwertiger aromatischer Rest, der 6 bis 20 Kohlenstoffatome enthält, ist;
(c) einen Polymerisationsinitiator, der ein Oxaziridin der allgemeinen Formel (I) umfaßt: 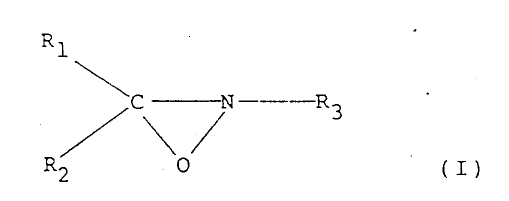 worin R₁, R₂ und R₃, gleich oder verschieden, jeweils für Wasserstoff oder einen aus Alkyl-, iso-Alkyl-, Alkenyl-, Alkylen-, Cycloalkyl-, Cycloalkylen-, Arylen-, Aryl-, Alkylaryl-, Alkylarylen-, Arylalkyl-, Arylalkylen-, Alkylcycloalkyl- und Alkylcycloalkylenresten ausgewählten C₁-C₂₀ Kohlenwasserstoffrest stehen oder R₁ und R₂ oder R₁ und R₂ und R₃ zusammen einen Cycloalkylring oder einen das N-Atom als Heteroatom enthaltenden heterocyclischen Ring bilden oder zwei Reste R₃ und zwei oder vier Reste R₁ und R₂ zusammengenommen ein Polyoxaziridin bilden; und
(d) ein organisches oder anorganisches Reduktionsmittel, auch als Polymerisationsaktivator definiert.

2. Zusammensetzung nach Anspruch 1, worin das Oxaziridin der Formel (I) in Mengen im Bereich von 0,01 bis 10 Mol-%, bezogen auf die Gesamtmenge an Doppelbindungen der Vinylmonomeren, anwesend ist.

3. Zusammensetzungen nach den Ansprüchen 1 oder 2, worin das Oxaziridin der Formel (I) 1 bis 5 Oxaziridinringe aufweist.

4. Zusammensetzungen nach irgendeinem der Ansprüche 1 bis 3, worin das polymerisierbare Vinylmonomere oder die polymerisierbaren Vinylmonomeren Acrylmonomere sind und das Elastomer ein Butadien/Acrylnitril-Copolymer ist, anwesend in Mengen im Bereich von 100 bis 2000 Gew.-Teilen Monomer pro 100 Gew.-Teile Polymer.

5. Zusammensetzungen nach irgendeinem der Ansprüche 1 bis 4, worin das Sulfimid (b) Saccharin ist.

6. Zusammensetzungen nach irgendeinem der Ansprüche 1 bis 5, worin die Menge an Sulfimid (b) unter 10 Gew.-Teilen pro 100 Gew.-Teile Lösung liegt und vorzugsweise zwischen 0,1 und 2 Gew.-%, bezogen auf die Lösung, beträgt.

7. Zusammensetzung nach irgendeinem der Ansprüche 1 bis 6, worin das Reduktionsmittel (d) eine Mischung von Aldehyd/Amin-Kondensationsprodukten ist.

8. Zusammensetzungen nach Anspruch 7, worin die Aldehyd/Amin-Kondensationsproduktmischung aus Butyraldehyd/Anilin-Kondensationsprodukten besteht, wobei die aktivste Komponente dieser Butyraldehyd/Anilin-Kondensationsproduktmischung vorzugsweise N-Phenyl-3,5-diethyl-2-propyl-1,2-dihydropyridin (DHP) ist, mit einem Reinheitsgrad von mehr als 70 Gew.-%.

9. Zusammensetzungen nach Anspruch 8, worin die Butyraldehyd/Anilin-Kondensationsprodukte oder DHP mit einem Lösungsmittel wie Ethylenchlorid oder Toluol verdünnt sind, wobei die Lösungsmittelmenge im Bereich von 10 bis 80 Gew.-% liegt.

10. Zusammensetzungen nach Anspruch 8 oder 9, worin ein lösliches Salz eines aus Kobalt, Nickel, Kupfer, Mangan, Eisen und Vanadium ausgewählten Übergangsmetalls in einer Konzentration nicht über 5 Gew.-%, bezogen auf die Butyraldehyd/Anilin-Kondensationsprodukte oder DHP, zugegeben ist.

11. Zusammensetzungen nach Anspruch 10, worin das lösliche Salz eines Übergangsmetalls Kupfer(I) oder (II)-Saccharinat oder Eisen (II) oder (III)-Saccharinat ist.

## Revendications

1. Compositions adhésives bi-composants, comprenant:
(a) une solution d'un élastomère dans un ou plusieurs monomères vinyliques polymérisables;
(b) un sulfimide ayant la formule: 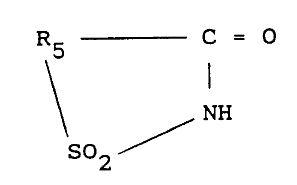 dans laquelle:
R₅ est un radical aromatique bivalent ayant de 6 à 20 atomes de carbone;
(c) un initiateur de polymérisation comprenant une oxaziridine de formule générale (I): 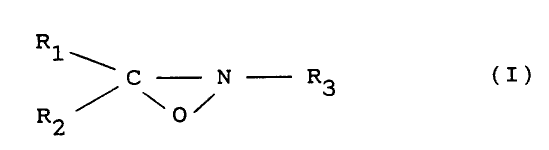 dans laquelle:
chacun des radicaux R₁, R₂ et R₃, qui peuvent être identiques où différents, représente un hydrogène ou un radical hydrocarboné en C₁-C₂₀ choisi parmi les radicaux alkyle, isoalkyle, alcényle, alkylène, cycloalkyle, cycloalkylène, arylène, aryle, alkylaryle, alkylarylène, arylalkyle, arylalkylène, alkylcycloalkyle et alkylcycloalkylène; ou encore
R₁ et R₂ et R₁ ou R₂ et R₃ forment ensemble un noyau cycloalkyle ou un noyau hétérocyclique contenant comme hétéroatome l'atome d'azote, ou encore
deux radicaux R₃ et deux ou quatre radicaux R₁ et R₂ forment ensemble une polyoxaziridine; et
(d) un agent réducteur organique ou minéral, défini aussi comme activateur de polymérisation.

2. Compositions selon la revendication 1, dans lesquelles l'oxaziridine de formule (I) est présente en quantité de 0,01 à 10% en moles par rapport à la quantité totale de doubles liaisons des monomères vinyliques.

3. Compositions selon les revendications 1 ou 2, dans lesquelles l'oxaziridine de formule 1 possède de 1 à 5 noyaux oxaziridine.

4. Compositions selon l'une quelconque des revendications 1 à 3, dans lesquelles le ou les monomères vinyliques polymérisables sont des monomères acryliques, et l'élastomère est un copolymère butadiène/acrylonitrile, présents en des quantités de 100 à 2000 parties en poids de monomère par 100 parties en poids de polymère.

5. Compositions selon l'une quelconque des revendications 1 à 4, dans lesquelles le sulfimide (b) est la saccharine.

6. Compositions selon l'une quelconque des revendications 1 à 5, dans lesquelles la quantité de sulfimide (b) est inférieure à 10% en poids par 100 parties en poids de solution et de préférence est comprise entre 0,1 et 2% en poids par rapport à la solution.

7. Composition selon l'une quelconque des revendications 1 à 6, dans laquelle l'agent réducteur est un mélange de produits de condensation aldéhyde/amine.

8. Compositions selon la revendication 7, dans lesquelles le mélange de produits de condensation aldéhyde/amine est constitué de produits de condensation butyraldéhyde/aniline, le composant le plus actif de ce mélange de produits de condensation butyraldéhyde/aniline étant de préférence la N-phényl-3,5-diéthyl-2-propyl-1,2-dihydropyridine (DHP), avec un degré de pureté supérieur à 70% en poids.

9. Compositions selon la revendication 8, dans lesquelles les produits de condensation butyraldéhyde/aniline ou le DHP sont dilués avec un solvant tel que le chlorure de méthylène ou le toluène, la quantité du solvant étant comprise entre 10 et 80% en poids.

10. Compositions selon les revendications 8 ou 9, dans lesquelles on ajoute à une concentration non supérieure à 5% en poids par rapport au produit de condensation butyraldéhyde/aniline ou DHP un sel soluble d'un métal de transition choisi parmi le cobalt, le nickel, le cuivre, le manganèse, le fer et le vanadium.

11. Compositions selon la revendication 10, dans lesquelles le sel soluble d'un métal de transition est le saccharinate de cuivre (I) ou (II) ou le saccharinate de fer (II) ou (III).
